# EUROPÄISCHE PATENTSCHRIFT

(11) **EP 2 731 912 B1**
(45) Veröffentlichungstag und Bekanntmachung des Hinweises auf die Patenterteilung: **12.12.2018**
(21) Anmeldenummer: 12723426.8
(22) Anmeldetag: 15.05.2012
(51) Int. Cl.: C01B 33/107, C01G 17/04

(54) **VERFAHREN ZUR HERSTELLUNG HÖHERER SILANE MIT VERBESSERTER AUSBEUTE**
METHOD FOR PRODUCING HIGHER SILANES WITH IMPROVED YIELD
PROCÉDÉ DE PRODUCTION DE SILANES SUPÉRIEURS À RENDEMENT AMÉLIORÉ

(30) Priorität: 11.07.2011 DE 102011078942
(43) Veröffentlichungstag der Anmeldung: 21.05.2014
(73) Patentinhaber: Evonik Degussa GmbH, 45128 Essen (DE)
(72) Erfinder: LANG, Jürgen Erwin, 76229 Karlsruhe (DE); RAULEDER, Hartwig, 79618 Rheinfelden (DE); MÜH, Ekkehard, 79618 Rheinfelden (DE)
(86) Internationale Anmeldenummer: PCT/EP2012/059027
(87) Internationale Veröffentlichungsnummer: WO 2013/007426

(56) Entgegenhaltungen:
- WO-A1-2008/009473
- DE-A1-102005 024 041
- DE-A1-102007 007 874
- DE-A1-102007 013 219

## Beschreibung

Die Erfindung betrifft ein Verfahren zur Herstellung von dimeren und/oder trimeren Siliciumverbindungen, insbesondere von Siliciumhalogenverbindungen. Zudem ist das erfindungsgemäße Verfahren auch zur Herstellung von entsprechenden Germaniumverbindungen geeignet. Ferner betrifft die Erfindung eine Vorrichtung zur Durchführung des Verfahrens sowie die Verwendung der hergestellten Siliciumverbindungen.

Siliciumverbindungen und Germaniumverbindungen, die in der Mikroelektronik, und auch in der Photovoltaik zum Einsatz kommen, wie beispielsweise zur Herstellung von hochreinem Silicium mittels Epitaxie, oder Siliciumnitrid (SiN), Siliciumoxid (SiO), Siliciumoxynitrid (SiON), Siliciumoxycarbid (SiOC), Siliciumcarbid (SiC), gemischter SiGe- oder Germaniumschichten, müssen besonders hohe Anforderungen an Ihre Reinheit erfüllen. Dies gilt insbesondere bei der Herstellung dünner Schichten dieser Materialien. Im genannten Anwendungsgebiet stören schon Verunreinigungen der Ausgangsverbindungen im ppb- bis ppt-Bereich. Beispielsweise muss Hexachlordisilian bei der Herstellung von Silicium-Schichten in der Mikroelektronik allerhöchsten Reinheitsanforderungen genügen, und zugleich in großen Mengen besonders preiswert zur Verfügung stehen.

Zur Herstellung der genannten hochreinen Verbindungen Siliciumnitrid, Siliciumoxid, Siliciumoxynitrid, Siliciumoxycarbid oder Siliciumcarbid, insbesondere von Schichten dieser Verbindungen, wird Hexachlordisilan durch Reaktion mit weiteren stickstoff-, sauerstoff- oder kohlenstoffhaltigen Precusoren umgesetzt. Auch zur Herstellung epitaktischer Silicium-Schichten, mittels Niedrigtemperaturepitaxie, wird Hexachlordisilan verwendet. Die meist über CVD (Chemical Vapor Deposition) Prozesse hergestellten Schichten weisen Schichtdicken von wenigen Nanometern auf, z.B. im Bereich der Transistorenherstellung in Speicherchips, bzw. bis zu 100 µm im Bereich der Dünnschichtphotovoltaik.

Bekannte Verfahren des Standes der Technik nutzen zur Herstellung von Halogenverbindungen des Siliciums, beispielsweise zur Herstellung des Hexachlordisilans (Disiliciumhexachlorid), die Umsetzung von Chlor oder Chlorwasserstoff mit Calciumsilicid oder auch mit Kupfersilicid. Ein weiteres Verfahren besteht in der Reaktion von Tetrachlorsilan (Siliciumtetrachlorid) beim Überleiten über geschmolzenes Silicium (Gmelin, System-Nr 15, Teil B, 1959, Seiten 658 bis 659). Nachteilig ist an beiden Verfahren die gleichsam stattfindende Chlorierung der im Calciumsilicid als auch im Silicium vorhandenen Verunreinigungen, die dann mit in das Produkt verschleppt werden. Soll das Hexachlordisilan bei der Herstellung von Halbleitern verwendet werden, sind diese Verunreinigungen unakzeptabel.

Gemäß der Offenbarung der deutschen Patentschrift DE 1 142 848, aus dem Jahr 1958, erhalten wir höchstreines Hexachlordisilan, wenn gasförmiges Siliciumchloroform in einem Elektrodenbrenner auf 200 bis 1000 °C erhitzt und das erzeugte Gasgemisch schnell abgekühlt und kondensiert wird. Zur Erhöhung der Effizienz wird das Siliciumchloroform vor der Umsetzung mit Wasserstoff oder einem inerten Gas verdünnt.

Die deutsche Patentschrift DE 1 014 971, aus dem Jahr 1953, betrifft ein Verfahren zur Herstellung von Hexachlordisilan, bei dem Siliciumtetrachlorid mit einem porösen Siliciumformkörper bei erhöhter Temperatur, vorzugsweise bei über 1000 °C, in einem Hotwall-Reaktor umgesetzt wird.

Aus der deutschen Offenlegungsschrift DE 3 62 493 ist ein weiteres Verfahren zur Herstellung von Hexachlordisilan bekannt. Hier werden zur Herstellung des Hexachlordisilans im technischen Maßstab Siliciumlegierungen oder metallisches Silicium mit Chlor unter Einsatz eines Vibrationsreaktors bei Temperaturen zwischen 100 und 500 °C umgesetzt.

D. N. Andrejew (J. für praktische Chemie, 4. Reihe, Bd. 23, 1964, Seiten 288 bis 297) beschreibt die Reaktion von Siliciumtetrachlorid (SiCl₄) in Gegenwart von Wasserstoff (H₂) unter Plasmabedingungen zu Hexachlordisilan (Si₂Cl₆) und höheren chlorierten Polysilanen. Die Reaktionsprodukte fallen als Gemisch an. Nachteilig ist bei diesem Verfahren, dass dieses Produktgemisch hochviskos bis fest anfällt und sich daher auf der Reaktorwand niederschlagen kann. Ebenfalls offenbart ist die Umsetzung von Alkylsilanen wie Methyltrichlorsilan (MTCS) in Gegenwart von Wasserstoff im Plasma zu Hexachlordisilan und einer Vielzahl ungewünschter Nebenprodukte. Beiden Ausführungsformen gemeinsam ist der nachteilige, zusätzliche Bedarf an Wasserstoff als Reduktionsmittel.

Die WO 2006/125425 A1 betrifft ein zweistufiges Verfahren zu Herstellung von Bulk-Silicium aus Halogensilanen. In der ersten Stufe werden bevorzugt Halogensilane, wie Fluor- oder Chlorsilane in Gegenwart von Wasserstoff einer Plasamentladung ausgesetzt. In der sich anschließenden zweiten Stufe wird das aus der ersten Stufe erhalten Polysilangemisch bei Temperaturen ab 400 °C, bevorzugt ab 700 °C zu Silicium pyrolysiert.

WO 2008/098640, deren Offenbarungsgehalt in die vorliegende Beschreibung ausdrücklich einbezogen ist, beschreibt ein zweistufiges Verfahren, durch eine nichtthermische Plasmabehandlung einer Siliciumverbindung mindestens ein Silan in hoher Reinheit zu gewinnen, welches durch Destillation abgetrennt wird. Ist die Siliciumverbindung SiCl₄, wobei optional wasserstoffhaltige Silane eingesetzt werden können, liefert das Verfahren Hexachlordisilan.

Die Patentanmeldung DE 102005024041 A1 schlägt ein Verfahren zur Herstellung von Hexachlordisilan vor, in dem in einem SiCl₄ enthaltenden Gas ein nichtthermisches Plasma mittels einer Wechselspannung angeregt und in das Plasma ein elektromagnetischer Impuls eingekoppelt wird, nämlich eine gepulste Mikrowellenstrahlung mit einer Pulsdauer von 1 ms, gefolgt von 9 bis 19 ms Pause.

Aufgabe der vorliegenden Erfindung war es nun, dieses Verfahren derart weiter zu entwickeln, dass Hexachlordisilan in der geforderten Reinheit mit verbesserter Ausbeute erzeugt wird.

Überraschend wurde gefunden, dass durch Einkoppeln zumindest eines periodischen elektromagnetischen Impulses in das nichtthermische Plasma, das in einem SiCl₄ enthaltenden Gas erzeugt wird, die Ausbeute von Hexachlordisilan gesteigert wird. Ebenso wurde gefunden, das durch Einkoppeln zumindest eines periodischen elektromagnetischen Impulses in das nichtthermische Plasma, das in einem GeCl₄ enthaltenden Gas erzeugt wird, die Ausbeute von Ge₂Cl₆ gesteigert wird.

Gegenstand der Erfindung ist also ein Verfahren zur Herstellung von Hexachlordisilan oder Ge₂Cl₆, wobei in einem Gas, das SiCl₄ oder GeCl₄ enthält,
a) ein nichtthermisches Plasma mittels einer Wechselspannung der Frequenz f angeregt wird,
welches dadurch gekennzeichnet ist, dass in das Plasma zumindest ein elektromagnetischer Impuls mit der Repetierrate g eingekoppelt wird, dessen Spannungskomponente eine Flankensteilheit in der ansteigenden Flanke von 10 V ns⁻¹ bis 1 kV ns⁻¹, und eine Pulsbreite b von 500 ns bis 100 µs aufweist, wobei eine flüssige Phase erhalten wird, und
b) aus der flüssigen Phase reines Hexachlordisilan oder Ge₂Cl₆ gewonnen wird.

Ein erheblicher Vorteil des erfindungsgemäßen Verfahrens ist, dass auf die Zugabe eines Reduktionsmittels, wie Wasserstoff, verzichtet werden kann. Im Gegensatz zu den bekannten Verfahren gemäß dem Stand der Technik wird ein dünnflüssiges, homogenes Reaktionsgemisch erhalten. Ferner bilden sich keine Ausfällungen oder ölige Substanzen. Insbesondere verfestigt sich das Reaktionsgemisch nicht bei einer Lagerung bei Raumtemperatur. Es kommt vorteilhaft zu einer hochselektiven Bildung des Hexachlordisilans oder Ge₂Cl₆, so dass bereits im flüssigen Reaktionsprodukt fast ausschließlich die dimere chlorierte Verbindung vorliegt. Das erfindungsgemäße Verfahren ermöglicht es, die Produkte gezielt in reiner und hochreiner Form, insbesondere nach einer destillativen Aufreinigung, bereitzustellen. Die nach dem erfindungsgemäßen Verfahren hergestellten Siliciumverbindungen sind zur Anwendung in der Halbleiterindustrie oder pharmazeutischen Industrie geeignet.

Die gemäß des erfindungsgemäßen Verfahrens erhaltene Verbindung kann als Präkursor für die Abscheidung dünner Schichten verwendet werden, vorzugsweise für die Abscheidung dünner Silicium-, Siliciumoxid-, Siliciumnitrid-, Siliciumcarbid-, SiOC-, SiON-, SiGe- oder Germaniumschichten.

Das erfindungsgemäße Verfahren hat den weiteren Vorteil, dass auf den Zusatz von teuren, inerten Edelgasen verzichtet werden kann. Alternativ kann ein Schleppgas, vorzugsweise ein unter Druck stehendes Inertgas, wie Stickstoff, Argon, ein anderes Edelgas oder Mischungen dieser zugesetzt werden.

Das Gas, in welchem das nichtthermische Plasma erzeugt wird, kann neben Siliciumtetrachlorid auch Wasserstoff, Organyl und/oder Halogen enthaltende Siliciumverbindungen aufweisen. Das Organyl kann ein lineares, verzweigtes und/oder cyclisches Alkyl mit 1 bis 18 Kohlenstoffatomen, lineares, verzweigtes und/oder cyclisches Alkenyl mit 2 bis 8 Kohlenstoffatomen, unsubstituiertes oder substituiertes Aryl und/oder entsprechendes Benzyl umfassen, insbesondere kann das Organyl Wasserstoff, oder Halogen, wobei das Halogen ausgewählt ist aus Fluor, Chlor, Brom und/oder Jod aufweisen.

Erfindungsgemäß erfolgt die Bildung von Hexachlordislan oder Ge₂Cl₆, je nachdem, ob das Gas SiCl₄ oder GeCl₄ enthält, überraschenderweise hochselektiv. Nebenprodukte werden nur in geringem Maße gebildet.

Nicht umgesetzte Edukte können nach Bedarf dem nichtthermischen Plasma erneut zugeführt werden. Zur vollständigen Umsetzung der Edukte in Hexachlordisilan oder Ge₂Cl₆ kann eine Zyklusfahrweise mit 1 bis 100 Zyklen genutzt werden. Bevorzugt wird eine geringe Anzahl von 1 bis 5 Zyklen, besonders vorzugsweise wird nur ein Zyklus durchlaufen. Die mittels der Umsetzung im nichtthermischen Plasma erhaltene Silicium- oder Germaniumverbindung liegt schon rein in der resultierenden Phase vor, aus der sie hochrein gewonnen werden kann, insbesondere kann sie einer destillativen Aufarbeitung, vorzugsweise in einem Mehrkolonnensystem, unterzogen werden. Auf diese Weise kann beispielsweise Hexachlordisilan in höchster Reinheit von den übrigen Reaktionsprodukten und Edukten isoliert werden. Die metallischen Verunreinigung der erfindungsgemäß erhaltenen Silicium- oder Germaniumverbindung mit anderen Metallverbindungen liegt wenigstens im ppm-Bereich bis in den ppt-Bereich, vorzugsweise im einstelligen ppb-Bereich.

Das nichtthermische Plasma wird in einem Plasma-Reaktor erzeugt, in dem eine plasmaelektrische Stoffumwandlung induziert wird und basiert auf anisothermen Plasmen. Für diese Plasmen ist eine hohe Elektronentemperatur Tₑ ≥ 10⁴ K und relativ niedrige Gastemperatur T_{G} ≤ 10³ K charakteristisch. Die für die chemischen Prozesse notwendige Aktivierungsenergie erfolgt überwiegend über Elektronenstöße (plasmaelektrische Stoffumwandlung). Typische nichtthermische Plasmen können beispielsweise durch Glimmentladung, HF-Entladung, Hohlkathodenentladung oder Koronarentladung erzeugt werden. Der Arbeitsdruck, bei dem die erfindungsgemäße Plasmabehandlung durchgeführt wird liegt zwischen 1 bis 10000 mbar_{abs}, bevorzugt bei 1 bis 1000 mbar_{abs}, besonders bevorzugt bei 100 bis 500 mbar_{abs}, insbesondere bei 200 bis 500 mbar_{abs,} wobei die zu behandelnde Phase vorzugsweise auf eine Temperatur von -40 °C bis 200 °C, besonders bevorzugt auf 20 bis 80 °C, ganz besonders bevorzugt auf 30 bis 70 °C eingestellt ist. Bei Germaniumverbindungen kann die entsprechende Temperatur davon abweichen - als auch darüber oder darunter liegen.

Für die Definition des nichtthermischen Plasmas und der homogenen Plasmakatalyse wird auf die einschlägige Fachliteratur verwiesen, wie beispielsweise auf "Plasmatechnik: Grundlagen und Anwendungen - Eine Einführung; Autorenkollektiv, Carl Hanser Verlag, München/Wien; 1984, ISBN 3-446-13627-4".

Das Paschen-Gesetz besagt, dass die Zündspannung für die Plasmaentladung im Wesentlichen eine Funktion des Produktes, p·d, aus dem Druck des Gases, p, und dem Elektrodenabstand, d, ist. Für das erfindungsgemäße Verfahren liegt dieses Produkt im Bereich von 0,001 bis 300 mm·bar, vorzugsweise von 0,01 bis 100 mm·bar, besonders bevorzugt bei 0,05 bis 10 mm·bar, insbesondere bei 0,07 bis 2 mm·bar. Die Entladung kann mittels verschiedenartiger Wechselspannungen und/oder gepulster Spannungen von 1 bis 1000 kV angeregt werden. Die Höhe der Spannung hängt in dem Fachmann bekannter Weise neben dem p·d-Wert der Entladungsanordung auch vom Prozessgas selbst ab. Besonders geeignet sind solche gepulste Spannungen, die hohe Flankensteilheiten und eine gleichzeitige Ausbildung der Entladung im gesamten Entladungsraum des Reaktors ermöglichen.

Der zeitliche Verlauf der Wechselspannung und/oder der eingekoppelten elektromagnetischen Impulse kann rechteckig, trapezförmig, gepulst oder stückweise aus einzelnen zeitlichen Verläufen zusammengesetzt sein. Wechselspannung und eingekoppelte elektromagnetischen Impulse können in jede dieser Formen des zeitlichen Verlaufs kombiniert sein.

Die Frequenz f der Wechselspannung kann beim erfindungsgemäßen Verfahren in einem Bereich von 1 Hz bis 100 GHz, bevorzugt von 1 Hz bis 100 MHz liegen. Die Repetierrate g des dieser Grundfrequenz überlagerten elektromagnetischen Impulse kann in einem Bereich von 0,1 kHz bis 50 MHz, bevorzugt von 50 kHz bis 50 MHz gewählt sein. Die Amplitude dieser Impulse kann von 1 bis 15 kVₚₚ (kV peak to peak), bevorzugt von 1 bis 10 kVₚₚ, besonders bevorzugt von 1 bis 8 kVₚₚ gewählt sein.

Diese Impulse können alle dem Fachmann bekannten Formen aufweisen, z.B. Sinus, Rechteck, Dreieck, oder eine Kombination daraus. Besonders bevorzugte Formen sind Rechteck oder Dreieck.

Dies steigert bereits die auf die Zeit bezogene Ausbeute an Hexachlordisilan erheblich gegenüber dem Verfahren des Standes der Technik ohne eingekoppeltem elektromagnetischen Impuls und einem sinusförmigen Verlauf der das Plasma erzeugenden Wechselspannung. Eine weitere Steigerung der Ausbeute kann erzielt werden, wenn in dem erfindungsgemäßen Verfahren dem in das Plasma eingekoppelten elektromagnetischen Impuls zumindest ein weiterer elektromagnetischer Impuls mit der gleichen Repetierrate überlagert wird, **oder** die beiden oder zumindest zwei Impulse in einem Tastverhältnis von 1 bis 1000 zueinender stehen. Bevorzugt werden beide Impulse mit rechteckiger Form gewählt, jeweils mit einem Tastverhältnis von 10 und möglichst großer Flankensteilheit. Je größer die Flankensteilheit, desto höher die Ausbeute. Die Amplitude dieser Impulse kann von 1 bis 15 kVₚₚ, bevorzugt von 1 bis 10 kVₚₚ gewählt sein.

Die Ausbeute steigt mit der Repetierrate. Es wurde beispielsweise beobachtet, dass bei Repetierraten mit der mehrfacher Grundfrequenz, zum Beispiel der 10-fachen Grundfrequenz, ein Sättigungseffekt gefunden wird, also keine weitere Steigerung der Ausbeute mehr anfällt. Die Erfinder sind der Meinung, ohne hier an eine besondere Theorie gebunden zu sein, dass dieser Sättigungseffekt von der Gaszusammensetzung, dem p·d-Wert der Versuchsanordnung, aber auch von der elektrischen Anpassung des Plasmareaktors an das elektronische Vorschaltgerät abhängt.

In dem erfindungsgemäßen Verfahren kann der oder die elektromagnetischen Impulse durch ein Impulsvorschaltgerät mit Strom- oder Spannungseinprägung eingekoppelt werden. Wird der Impuls stromeingeprägt, erhält man eine größere Flankensteilheit.

In einer weiteren Ausprägung des erfindungsgemäßen Verfahrens kann der Impuls in dem Fachmann bekannter weise anstelle periodisch synchron auch transient asynchron eingekoppelt werden.

In einer weiteren Ausprägung des erfindungsgemäßen Verfahrens kann der Reaktor mit röhrenförmigem dielektrischem Material bestückt sein, um inhomogene Felder im Reaktionsraum und somit unkontrollierte Umsetzung zu verhindern. Vorzugsweise ist das Verhältnis Reaktorrohrdurchmesser zu dessen Länge 300 mm/700 mm bei 50 Rohren. Weiterhin bevorzugt bilden der Reaktor mit dem niederkapazitativem dielektrischen Material und das niederohmig und breitbandig ausgelegte Vorschaltgerät eine Einheit.

In dem erfindungsgemäßen Verfahren können in dem Reaktor Rohre eingesetzt werden, die durch Spacer aus inertem Material gehaltert und auf Abstand gehalten sind. Mit solchen Spacern werden Fertigungstoleranzen der Rohre ausgeglichen und zugleich ihre Beweglichkeit im Reaktor minimiert.

Es kann ebenfalls vorteilhaft sein, in dem erfindungsgemäßen Verfahren Spacer aus einem low-κ-Material einzusetzen. Besonders bevorzugt kann dem Fachmann bekanntes Teflon eingesetzt werden.

In der erfindungsgemäßen Ausführungsform des Verfahrens kann zusammen mit SiCl₄ mindestens eine weitere Wasserstoff enthaltende Siliciumverbindung in einem Plasmareaktor zur Gasphasenbehandlung umgesetzt werden, insbesondere ohne Zusatz eines Reduktionsmittels. Beispielhaft seien als Siliciumverbindungen Trichlorsilan, Dichlorsilan, Monochlorsilan, Monosilan, Methyltrichlorsilan, Dimethyldichlorsilan, Trimethylchlorsilan und/oder Propyltrichlorsilan aufgezählt.
Dies gilt auch für die korrespondierenden Ge Verbindungen.

Eine alternative, bevorzugte Ausführungsform sieht die Umsetzung von Siliciumtetrachlorid nur mit weiteren Hydrogensilanen, wie Trichlorsilan, vor. Weitere bevorzugte Ausführungsformen sehen die Umsetzung von Siliciumtetrachlorid nur mit Organylgruppen enthaltenden Silanen vor, beispielsweise wird Methyltrichlorsilan dem Tetrachlorsilan zugemischt und anschließend dem Reaktor zugeführt. Beide alternative Ausführungsformen erfolgen insbesondere ohne Zusatz eines Reduktionsmittels.

Allgemein bevorzugte Verfahrensvarianten sehen eine Umsetzung des Siliciumtetrachlorids mit Hydrogensilanen, zum Beispiel Trichlorsilan und/oder alkylhaltigen Siliciumverbindungen, wie Methyltrichlorsilan in einer nichtthermischen Plasmabehandlung vor, insbesondere ohne Zusatz eines Reduktionsmittels.

Die im Verfahrensschritt a) gebildete Silicium- oder Germaniumverbindung kann in einem Auffangbehälter der Vorrichtung zur Durchführung des Verfahrens angereichert werden, beispielsweise im Sumpf der Vorrichtung, und kann einer destillativen Aufarbeitung zugeführt werden.

Die Verfahrensschritte a) und/oder b) können diskontinuierlich oder kontinuierlich durchgeführt werden. Besonders wirtschaftlich ist eine Verfahrensführung, bei der die Verfahrensschritte a) und b) kontinuierlich erfolgen.

Das SiCl₄ oder GeCl₄ enthaltende Gas kann dem Plasmareaktor zur Gasphasenbehandlung kontinuierlich zugeführt werden, wobei das SiCl₄ oder GeCl₄ in dem Gas zuvor angereichert werden kann. Aus der sich bildenden Phase werden die höher siedenden Reaktionsprodukte in einem Auffangbehälter abgeschieden.

Sowohl im Schritt a) als auch im Schritt b) des erfindungsgemäßen Verfahrens kann man den Prozess kontinuierlich überwachen. Sobald das Reaktionsprodukt eine ausreichende Konzentration im Auffangbehälter ("Sumpf") erreicht hat, kann die destillative Aufarbeitung zu seiner Abtrennung in kontinuierlicher oder diskontinuierlicher Betriebsweise erfolgen. Für eine diskontinuierliche destillative Aufarbeitung ist eine Kolonne zur Auftrennung ausreichend. Dazu wird die Verbindung am Kopf einer Kolonne mit ausreichender Anzahl an Trennstufen in hoher oder höchster Reinheit entnommen. Die geforderte Reinheit kann mittels GC, IR, NMR, ICP-MS oder durch Widerstandsmessung bzw. GD-MS nach Abscheidung des Si überprüft werden.

Erfindungsgemäß kann die kontinuierliche Aufarbeitung der Verfahrensprodukte in einem Kolonnensystem mit mindestens zwei Kolonnen, bevorzugt in einem System mit mindestens 3 Kolonnen erfolgen. Auf diese Weise kann beispielsweise das ebenfalls bei der Reaktion gebildete Chlorwasserstoffgas (HCl) über eine so genannte Leichtsiederkolonne über Kopf, erste Kolonne, abgetrennt und das aus dem Sumpf aufgefangene Gemisch in seine Bestandteile aufgetrennt werden, indem Siliciumtetrachlorid (SiCl₄) am Kopf einer zweiten Kolonne und Hexachlordisilan (Si₂Cl₆) am Kopf einer dritten Kolonne destillativ abgetrennt werden. Auf diese Weise kann das aus dem Plasmareaktor erhaltene Reaktionsgemisch durch Rektifikation getrennt und das Reaktionsprodukt Hexachlordisilan oder Octachlortrisilan in der gewünschten Reinheit erhalten werden. Die destillative Aufarbeitung der Siliciumverbindung kann sowohl unter Normaldruck, als auch unter Unterdruck oder Überdruck erfolgen, insbesondere bei einem Druck zwischen 1 bis 1500 mbar_{abs}. Die Kopftemperatur der Kolonne zur destillativen Aufarbeitung der Siliciumverbindung weist dabei eine Kopftemperatur zwischen 50 und 250 °C auf. Das gleiche gilt für die Germaniumverbindungen.

Die ohnehin nicht stark verunreinigten Verfahrensprodukte lassen sich durch die destillative Aufarbeitung in sehr hoher bis höchster Reinheit isolieren. Die entsprechenden Temperaturen zur Aufarbeitung der Germaniumverbindungen können davon abweichen.

Erfindungsgemäß kann ein Reaktor zur Erzeugung des nichtthermischen Plasmas eingesetzt werden, sowie ein Auffangbehälter und ein Kolonnensystem zur destillativen Aufarbeitung, wobei das Kolonnensystem für die kontinuierliche Verfahrensführung mindestens zwei Kolonnen, insbesondere mindestens 3 Kolonnen umfassen kann. In einer zweckmäßigen Variante kann das Kolonnensystem vier Kolonnen umfassen. Bei der diskontinuierlichen Verfahrensführung ist eine Kolonne ausreichend. Die Kolonnen sind beispielsweise Rektifikationskolonnen.

Durch den erfindungsgemäßen Einsatz eines Kolonnensystems in der kontinuierlichen Verfahrensführung kann beispielsweise Chlorwasserstoffgas über eine Leichtsiederkolonne am Kopf der ersten Kolonne direkt aus der Vorrichtung abgezogen werden, anschließend kann nicht umgesetztes Tetrachlorsilan am Kopf der zweiten Kolonne entnommen werden und höher siedende Umsetzungsprodukte am Kopf der dritten Kolonne. Werden mehrere höher siedende Umsetzungsprodukte isoliert, kann eine vierte Kolonne zugeordnet sein.

Ferner können in einer solchen Vorrichtung neben dem Reaktor auch ein oder mehrere weitere Reaktoren zum Einsatz kommen, die in Reihe oder parallel geschaltet werden. Erfindungsgemäß kann mindestens ein Reaktor der Vorrichtung ein Ozonisator sein. Dies hat den großen Vorteil der alternativ möglichen Verwendung von handelsüblichen Ozonisatoren, das die Investitionskosten wesentlich senkt. Die Reaktoren der Erfindung sind zweckmäßig mit Glasrohren ausgestattet, wobei die Rohre bevorzugt parallel bzw. koaxial angeordnet und mittels Spacern aus inertem Material beabstandet sind. Als inertes Material eignet sich insbesondere Teflon.

Die nach dem erfindungsgemäßen Verfahren hergestellten Silicium- oder Germaniumverbindungen sind zur Anwendung in der Halbleiterindustrie oder Pharmazeutischen Industrie geeignet, da sie Verunreinigungen nur im ppb-Bereich, bevorzugt im ppt-Bereich oder darunter aufweisen. Die Verbindungen können in hoher und höchster Reinheit hergestellt werden, weil die Verbindungen gemäß dem erfindungsgemäßen Verfahren überraschend selektiv gebildet werden und somit nur wenige Nebenprodukte in geringen Mengen die Aufarbeitung der Verfahrensprodukte stören.

Daher eignen sich die erfindungsgemäß hergestellten Silicium- oder Germaniumverbindungen zur Herstellung von Siliciumnitrid, Siliciumoxynitrid, Siliciumcarbid, Siliciumoxycarbid oder Siliciumoxid, oder Germaniumnitrid, Germaniumoxynitrid, Germaniumcarbid, Germaniumoxycarbid oder Germaniumoxid insbesondere zur Herstellung von Schichten aus diesen Verbindungen.

Die folgenden Beispiele erläutern das erfindungsgemäße Verfahren näher, ohne die Erfindung auf diese zu beschränken.

### Vergleichsbeispiel 1. Sinusförmiger Verlauf der Plasma erzeugenden Wechselspannung - ohne eingekoppelten elektromagnetischen Impuls.

Mit Trichlorsilan (HiCl₃, abgekürzt TCS) angereichertes Siliciumtetrachlorid (SiCl₄), wobei Siliciumtetrachlorid im Überschuss vorliegt, wurde kontinuierlich verdampft und in ein nichtthermisches Plasma einer Gasentladungsstrecke eines Quarzglasreaktors geführt. Die Gasphase wurde mit etwa 250 ml/h durch den Reaktor geführt. Während die Gasphase durch den Reaktor strömte, wurde eine sinusförmige Wechselspannung mit einer Frequenz f, f = 1,9 kHz, und eine Amplitude von 35 kVₚₚ angelegt. Der Leistungseintrag in den Reaktor betrug dabei etwa 40 W. Der Betriebsdruck wurde auf etwa 300 mbar_{abs} eingestellt.

Die Zündspannung betrug ca. 10 kV, und es wurde eine mittlere Schlagweite von ca. 1000 µm eingestellt

Nach Durchlaufen des Reaktors wurde die Reaktionsmischung in einem Auffangbehälter in flüssiger Form gesammelt. Die Destillation erfolgte diskontinuierlich in einer Destillationsapparatur mit einer 50 cm Kolonne mit Sulzer-Metallpackung. Bei einer Sumpftemperatur von etwa 70 °C und einem Druck von 750 mbar_{abs} wurde bei einer Kopftemperatur von etwa 50 °C Siliciumtetrachlorid abdestilliert. Anschließend wurde der Druck auf etwa 65 mbar_{abs} erniedrigt und bei einer Sumpftemperatur um 80 °C reines Hexachlordisilan abdestilliert. Die Kopftemperatur lag um 70 °C. Der Gehalt an metallischen Verunreinigungen entsprach dabei der Nachweisgrenze im IPC-MS.

Man erhielt eine Ausbeute an Hexachlordisilan von 17 g/h.

### Beispiel 1.

Wie Vergleichsbeispiel 1, jedoch wurde zusätzlich ein elektromagnetischer Impuls mit rechteckigem Verlauf und einer Amplitude von 8 kVₚₚ eingekoppelt.

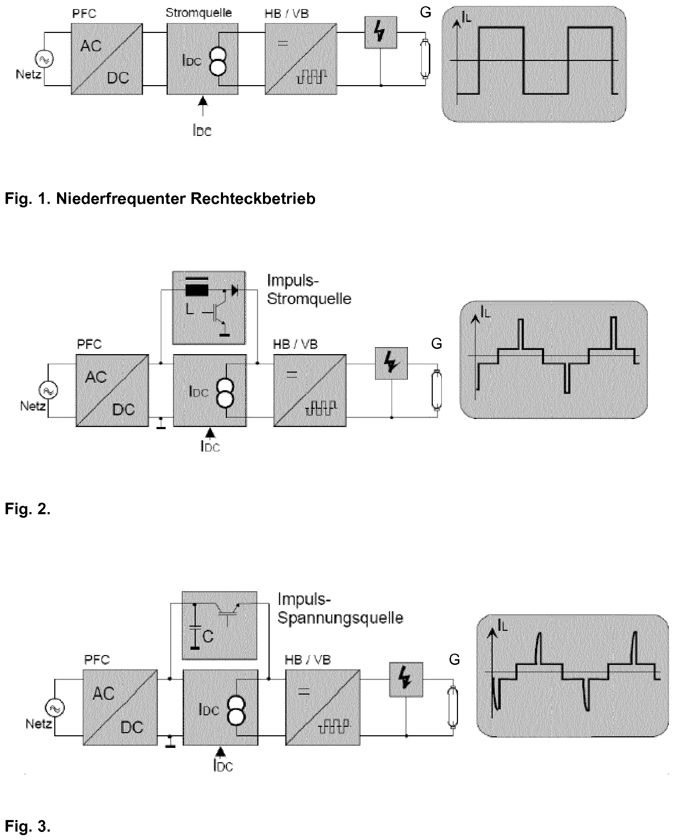

Die Flankensteilheit im aufsteigenden Teil des rechteckigen elektromagnetischen Impulses war 10 kV/100 ns eingestellt, die Pulsbreite b = 1 µs, sowie die Repetierrate bei g = 400 Hz. Der erfindungsgemäß in das Plasma eingekoppelte Impuls I_{L} hatte einen niederfrequenten rechteckigen Verlauf als Funktion der Zeit. Die Anordnung mit dem Quarzglasreaktor G und der Verlauf des Impulses sind in der **Fig. 1** dargestellt.

Man erhielt eine Ausbeute von 20 g/h Hexachlordisilan.

### Beispiel 2.

Wie im Vergleichsbeispiel 1, jedoch wurde zu dem rechteckigen Impuls mit der Flankensteilheit und der Amplitude wie im Beispiel 1 ein weiterer rechteckiger Impuls mit der Amplitude von 10 kVₚₚ und mit einem Tastverhältnis von 10 eingekoppelt.
Der zeitliche Verlauf des summierten Impulses I_{L} und die Anordnung am Quarzglasreaktor sind in **Fig. 2** dargestellt.

Die Ausbeute betrug 24 g/h Hexachlordisilan.

### Beispiel 3.

Wie Beispiel 2, jedoch wurden die Impulse mittels eines Impulsvorschaltgerätes mit Spannungseinprägung eingekoppelt. Der weitere Impuls wies eine Amplitude von 12 kVₚₚ und eine geringere Flankensteilheit als der des Beispiels 2 auf. Seinen zeitlichen Verlauf und die Anordnung mit dem Quarzglasreaktor G zeigt die **Fig. 3****.**

Man erhielt eine Ausbeute Hexachlordisilan von 22 g/h.

Die Ergebnisse der Beispiele und des Vergleichsbeispiels sind in der Tabelle 1 zusammengefasst.

**Tabelle 1.**

| **SiCl₄** | **TCS** | **Einprägung** | **Ausbeute** (g/h) | **Beispiel** |
|---|---|---|---|---|
| 99,9 % | 0,1 % | - | **17** | Vergleich |
| 99,9 % | 0,1 % | Strom | **20** | 1 |
| 99,9 % | 0,1 % | Strom | **24** | 2 |
| 99,9 % | 0,1 % | Spannung | **22** | 3 |

## Patentansprüche

1. Verfahren zur Herstellung von Hexachlordisilan oder Ge₂Cl₆,
wobei in einem Gas, das SiCl₄ oder GeCl₄ enthält,
a) ein nichtthermisches Plasma mittels einer Wechselspannung der Frequenz f angeregt wird,
**dadurch gekennzeichnet,**
**dass** in das Plasma zumindest ein elektromagnetischer Impuls mit der Repetierrate g eingekoppelt wird,
dessen Spannungskomponente eine Flankensteilheit in der ansteigenden Flanke von 10 V ns⁻¹ bis 1 kV ns⁻¹, und
eine Pulsbreite b von 500 ns bis 100 µs aufweist,
wobei eine flüssige Phase erhalten wird, und
b) aus der flüssigen Phase reines Hexachlordisilan oder Ge₂Cl₆ in einer destillativen Aufarbeitung gewonnen wird.

2. Verfahren nach Anspruch 1,
**dadurch gekennzeichnet,**
**dass** die Frequenz f der Wechselspannung von 1 Hz bis 100 MHz,
die Repetierrate g von 50 kHz bis 50 MHz, und
die Amplitude von 1 bis 15 kVₚₚ beträgt.

3. Verfahren nach Anspruch 1 oder 2,
**dadurch gekennzeichnet,**
**dass** dem in das Plasma eingekoppelten elektromagnetischen Impuls zumindest ein weiterer elektromagnetischer Impuls mit der gleichen Repetierrate überlagert wird, und die beiden oder zumindest zwei Impulse in einem Tastverhältnis von 1 bis 1000 zueinander stehen.

4. Verfahren nach einem der vorhergehenden Ansprüche,
**dadurch gekennzeichnet,**
**dass** zumindest ein elektromagnetischer Impuls durch ein Impulsvorschaltgerät mit Strom- oder Spannungseinprägung eingekoppelt wird.

5. Verfahren nach einem der vorhergehenden Ansprüche,
**dadurch gekennzeichnet,**
**dass** als Reaktor, in dem das nichtthermische Plasma erzeugt wird, ein Ozonisator eingesetzt wird.

6. Verfahren nach einem der vorhergehenden Ansprüche,
**dadurch gekennzeichnet,**
**dass** die destillative Aufarbeitung unter Normaldruck, Unterdruck oder Überdruck erfolgt.

7. Verfahren nach einem der vorhergehenden Ansprüche,
**dadurch gekennzeichnet,**
**dass** die destillative Aufarbeitung bei einem Druck von 50 bis 1500 mbar erfolgt.

8. Verfahren nach einem der vorhergehenden Ansprüche,
**dadurch gekennzeichnet,**
**dass** die Verfahrensschritte a) und/oder b) kontinuierlich erfolgen, und die im Schritt b) erhaltene Phase einer destillativen Aufarbeitung unterzogen wird.

9. Verfahren nach einem der vorhergehenden Ansprüche,
**dadurch gekennzeichnet,**
**dass** der Reaktor mit röhrenförmigem dielektrischem Material bestückt wird.

10. Verfahren nach einem der vorhergehenden Ansprüche,
**dadurch gekennzeichnet,**
**dass** in dem Reaktor Rohre eingesetzt werden, die durch Spacer aus inertem Material gehaltert und auf Abstand gehalten sind.

11. Verfahren nach Anspruch 10,
**dadurch gekennzeichnet,**
**dass** ein Spacer aus einem low-κ-Material eingesetzt wird.

## Claims

1. Process for preparing hexachlorodisilane or Ge₂Cl₆, wherein in a gas comprising SiCl₄ or GeCl₄,
a) a nonthermal plasma is activated by means of an AC voltage of frequency f,
**characterized in that**
at least one electromagnetic pulse with repetition rate g injected into the plasma
has a voltage component having an edge slope in the rising edge of 10 V ns⁻¹ to 1 kV ns⁻¹, and
a pulsewidth b of 500 ns to 100 µs,
to obtain a liquid phase, and
b) pure hexachlorodisilane or Ge₂Cl₆ is obtained from the liquid phase in a distillative workup.

2. Process according to Claim 1,
**characterized in that**
the frequency f of the AC voltage is 1 Hz to 100 MHz,
the repetition rate g is 50 kHz to 50 MHz, and the amplitude is 1 to 15 kVₚₚ.

3. Process according to Claim 1 or 2,
**characterized in that**
at least one further electromagnetic pulse with the same repetition rate is superimposed on the electromagnetic pulse injected into the plasma, and both or at least two pulses are in a duty ratio of 1 to 1000 relative to one another.

4. Process according to any of the preceding claims,
**characterized in that**
at least one electromagnetic pulse is injected through a pulse ballast with current or voltage impression.

5. Process according to any of the preceding claims,
**characterized in that**
the reactor used, in which the nonthermal plasma is generated, is an ozonizer.

6. Process according to any of the preceding claims,
**characterized in that**
the distillative workup is effected under standard pressure, reduced pressure or elevated pressure.

7. Process according to any of the preceding claims,
**characterized in that**
the distillative workup is effected at a pressure of 50 to 1500 mbar.

8. Process according to any of the preceding claims,
**characterized in that**
process steps a) and/or b) are effected continuously, and the phase obtained in step b) is subjected to a distillative workup.

9. Process according to any of the preceding claims,
**characterized in that**
the reactor is equipped with tubular dielectric material.

10. Process according to any of the preceding claims,
**characterized in that**
tubes held and spaced apart by spacers made from inert material are used in the reactor.

11. Process according to Claim 10,
**characterized in that**
a spacer made from a low-κ material is used.

## Revendications

1. Procédé pour la préparation d'hexachlorodisilane ou de Ge₂Cl₆, dans lequel dans un gaz comprenant du SiCl₄ ou du GeCl₄,
a) un plasma non thermique est activé au moyen d'une tension alternative de fréquence f,
**caractérisé en ce que**
au moins une impulsion électromagnétique avec une fréquence de récurrence g injectée dans le plasma a
une composante de tension ayant une pente de front dans le front montant de 10 V.ns⁻¹ à 1 kV.ns⁻¹ et
une largeur d'impulsion b de 500 ns à 100 µs,
pour obtenir une phase liquide et
b) de l'hexachlorodisilane pur ou du Ge₂Cl₆ pur est obtenu à partir de la phase liquide dans un traitement conclusif par distillation.

2. Procédé selon la revendication 1,
**caractérisé en ce que**
la fréquence f de la tension alternative est de 1 Hz à 100 MHz,
la fréquence de récurrence g est de 50 kHz à 50 MHz et l'amplitude est de 1 à 15 kVₚₚ.

3. Procédé selon la revendication 1 ou 2,
**caractérisé en ce que**
au moins une autre impulsion électromagnétique avec la même fréquence de récurrence est superposée sur l'impulsion électromagnétique injectée dans le plasma et toutes deux ou au moins deux impulsions sont en un rapport de fonctionnement de 1 à 1000 l'une par rapport à l'autre.

4. Procédé selon l'une quelconque des revendications précédentes,
**caractérisé en ce que**
au moins une impulsion électromagnétique est injectée grâce à un régulateur d'impulsions avec impression de courant ou de tension.

5. Procédé selon l'une quelconque des revendications précédentes,
**caractérisé en ce que**
le réacteur, dans lequel le plasma non thermique est produit, utilisé est un ozoniseur.

6. Procédé selon l'une quelconque des revendications précédentes,
**caractérisé en ce que**
le traitement conclusif par distillation est effectué sous pression standard, pression réduite ou pression élevée.

7. Procédé selon l'une quelconque des revendications précédentes,
**caractérisé en ce que**
le traitement conclusif par distillation est effectué à une pression de 50 à 1500 mbar.

8. Procédé selon l'une quelconque des revendications précédentes,
**caractérisé en ce que**
les étapes de procédé a) et/ou b) sont effectuées en continu et la phase obtenue dans l'étape b) est soumise à un traitement conclusif par distillation.

9. Procédé selon l'une quelconque des revendications précédentes,
**caractérisé en ce que**
le réacteur est pourvu d'un matériau diélectrique tubulaire.

10. Procédé selon l'une quelconque des revendications précédentes,
**caractérisé en ce que**
des tubes supportés et maintenus à distance les uns des autres par des entretoises constituées de matériau inerte sont utilisés dans le réacteur.

11. Procédé selon la revendication 10,
**caractérisé en ce que**
une entretoise constituée d'un matériau de faible κ est utilisée.
